# EUROPEAN PATENT SPECIFICATION

(11) **EP 4 316 969 B1**
(45) Date of publication and mention of the grant of the patent: **02.09.2026**
(21) Application number: 22781298.9
(22) Date of filing: 31.03.2022
(51) Int. Cl.: B63B 11/04, B63B 25/16, F17C 13/00

(54) **GAS TREATING SYSTEM AND SHIP**
GASBEHANDLUNGSSYSTEM UND SCHIFF
SYSTÈME DE TRAITEMENT DE GAZ ET NAVIRE

(30) Priority: 31.03.2021 JP 2021062168
(43) Date of publication of application: 07.02.2024
(73) Proprietor: KAWASAKI JUKOGYO KABUSHIKI KAISHA, Kobe-shi, Hyogo 650-8670 (JP)
(72) Inventor: SHIMODA, Taichiro, Kobe-shi, Hyogo 650-8670 (JP); TOMINAGA, Haruhiko, Kobe-shi, Hyogo 650-8670 (JP); MATSUO, Masashi, Kobe-shi, Hyogo 650-8670 (JP); HIWATASHI, Sho, Kobe-shi, Hyogo 650-8670 (JP); TAKATA, Hirotaka, Kobe-shi, Hyogo 650-8670 (JP); NAKADO, Hiroki, Kobe-shi, Hyogo 650-8670 (JP)
(74) Representative: Arnold & Siedsma
(86) International application number: PCT/JP2022/016850
(87) International publication number: WO 2022/211089

(56) References cited:
- EP-A1- 3 763 617
- WO-A1-2020/202578
- GB-A- 1 184 081
- JP-A- 2018 128 039
- JP-A- S5 338 081
- JP-U- S59 152 300
- KR-A- 20150 126 162
- KR-B1- 102 007 363

## Description

### Technical Field

The present disclosure relates to a gas processing system and a ship including the gas processing system.

### Background Art

A multiple-shell tank has been known, which includes: an inner shell storing a cryogenic liquid therein; and an outer shell accommodating the inner shell, a gas being filled in a space between the inner shell and the outer shell. For example, PTL 1 discloses a double-shell tank including an inner shell and an outer shell. A space between the inner shell and the outer shell in the double-shell tank is filled with a boil off gas discharged from the inner shell. A discharge passage is connected to the outer shell such that the gas in the space between the inner shell and the outer shell can be discharged when pressure in the space is too high. PTL 2 discloses a boil-off gas storage type cryogenic fuel tank, which forms a container storing liquefied natural gas (LNG) in a double layer structure of a container main body and an outer wall, stores boil-off gas of the LNG in a space between the container main body and the outer wall.

PTL 3 discloses a method for cooling double-barrier liquefied gas storage tanks-such as those used on ships-prior to filling, by spraying a preliminary quantity of liquefied gas into both the inner and outer tank spaces, allowing it to evaporate and cool the tank walls while filling the spaces with the gas's own vapour; the process includes purging the tank spaces with inert gas beforehand to prevent explosive mixtures, and provides for efficient, safe, and rapid preparation of tanks for loading and unloading of cryogenic liquefied gases like methane.

### Citation List

### Patent Literature

PTL 1: International Publication No. 2020/202578
PTL 2: Korean Patent Publication No. 10-2007363
PTL 3: GB 1184081 A

### Summary of Invention

### Technical Problem

When a combustible gas is filled in the space between the inner shell and the outer shell, and the combustible gas is discharged from the space between the inner shell and the outer shell as described above, the combustible gas needs to be safely processed. The same is true when the combustible gas is discharged from a space between two outer shells in a multiple-shell tank including three or more shells.

An object of the present disclosure is to provide a gas processing system that can safely process a combustible gas discharged to an outside from a space located outside an inner shell of a multiple-shell tank, and a ship including the gas processing system.

### Solution to Problem

To solve the above problem, a gas processing system according to the appended set of claims is provided.

Moreover, a ship according to one aspect of the present disclosure includes the above gas processing system.

### Advantageous Effects of Invention

The present disclosure can provide a gas processing system that can safely process a combustible gas discharged to an outside from a space located outside an inner shell in a multiple-shell tank, and a ship including the gas processing system.

### Brief Description of Drawings

FIG. 1 is a schematic side view of a ship including a gas processing system according to Embodiment 1 of the present disclosure.
FIG. 2 is a schematic configuration diagram showing an entire configuration of the gas processing system shown in FIG. 1.
FIG. 3 is a schematic configuration diagram showing an entire configuration of the gas processing system according to Modified Example 1 of Embodiment 1.
FIG. 4 is a schematic configuration diagram showing an entire configuration of the gas processing system according to Modified Example 2 of Embodiment 1.
FIG. 5 is a schematic configuration diagram showing an entire configuration of the gas processing system according to Modified Example 3 of Embodiment 1.
FIG. 6 is a diagram showing another example of the configuration of the gas processing system shown in FIG. 5.
FIG. 7 is a schematic configuration diagram showing an entire configuration of the gas processing system according to Embodiment 2 of the present disclosure.
FIG. 8 is a schematic configuration diagram showing an entire configuration of the gas processing system according to Modified Example 1 of Embodiment 2.
FIG. 9 is a schematic configuration diagram showing an entire configuration of the gas processing system according to Modified Example 2 of Embodiment 2.

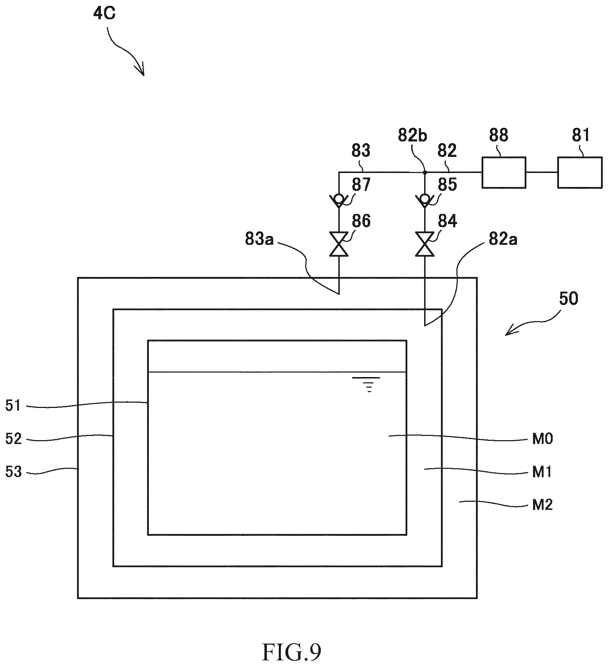

Figure 9 is the only embodiment showing a gas processing system as claimed.

### Description of Embodiments

Hereinafter, embodiments of the present disclosure will be described with reference to the drawings. In the present description, the term "inside" denotes a side closer to a center portion of a space in an inner shell of a multiple-shell tank, and the term "outside" denotes a side farther from the center portion of the space in the inner shell of the multiple-shell tank.

### Embodiment 1

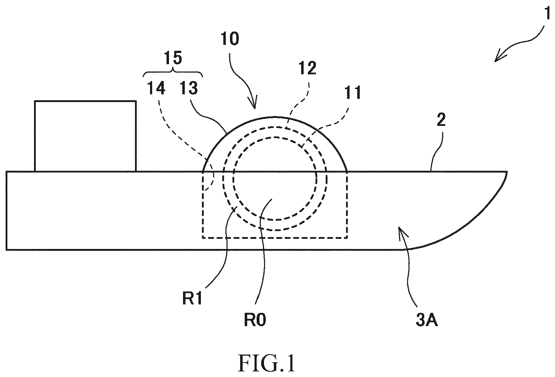

FIG. 1 is a schematic side view of a ship 1 including a multiple-shell tank 10 according to Embodiment 1. The ship 1 is a liquefied gas carrier that carries a cryogenic liquid. The ship 1 includes the multiple-shell tank 10. The multiple-shell tank 10 includes an inner shell 11 and an outer shell 12 accommodating the inner shell 11. The cryogenic liquid is stored in a storage space R0 located inside the inner shell 11. By covering the inner shell 11 with the outer shell 12, a sealed insulating space R1 is located outside the inner shell 11 and inside the outer shell 12. Thermal insulation is located in the insulating space R1. For example, the thermal insulation may be powder, such as perlite, or may be a heat preventing panel attached to a surface of the inner shell 11.

In the present embodiment, each of the inner shell 11 and the outer shell 12 has a spherical shape. However, each of the inner shell 11 and the outer shell 12 does not necessarily have to have a spherical shape. For example, each of the inner shell 11 and the outer shell 12 may have such a shape that a short tubular body is sandwiched between an upper hemispherical body and a lower hemispherical body, may have a laterally-placed cylindrical shape, or may have a rectangular shape. Or, for example, each of the inner shell 11 and the outer shell 12 may have such a shape as to bulge in a direction from a center of the inner shell 11 to an upper side at 45° and/or a direction from the center of the inner shell 11 to a lower side at 45°. The shape of the inner shell 11 and the shape of the outer shell 12 may be similar to each other or may not be similar to each other.

An upper portion of the outer shell 12 is covered with a tank cover 13, and the rest of the outer shell 12 is covered with a holding wall 14. The holding wall 14 is, for example, part of the hull 2. To be specific, the holding wall 14 includes: a pair of longitudinal bulkheads that are located at both sides of the outer shell 12 in a ship width direction and extend in a ship longitudinal direction; an inner bottom plate that is located under the outer shell 12 and above a ship bottom outer plate of the hull 2 and extends in a ship longitudinal direction; and the like.

The tank cover 13 and the holding wall 14 are configured as one accommodating structure 15 that accommodates the outer shell 12. Since the tank cover 13 and the holding wall 14 cover the outer shell 12, a sealed space is located inside the tank cover 13 and the holding wall 14 and outside the outer shell 12. In other words, the tank cover 13 and the holding wall 14 serve as one outer shell that further covers the outer shell 12. In the present description and the claims, the outer shell of the multiple-shell tank also denotes a shell that serves as an outermost shell, such as the accommodating structure 15 including the tank cover and the holding wall, which forms a sealed space together with an inside outer shell.

The multiple-shell tank 10 does not necessarily have to be mounted as a cargo tank on the ship 1 and may be mounted as a fuel tank. Moreover, although FIG. 1 shows the ship 1 including one multiple-shell tank 10, the ship 1 may include the multiple-shell tanks 10. When the ship 1 includes the multiple-shell tanks 10, a bulkhead located between two adjacent multiple-shell tanks 10 is also included in the accommodating structure 15 covering the outer shell 12.

In the present embodiment, when the pressure of the combustible gas in the insulating space R1 exceeds predetermined upper limit pressure, the pressure of the gas in the insulating space R1 needs to be lowered by discharging the combustible gas from the insulating space R1. The ship 1 includes a gas processing system 3A that can process the combustible gas discharged from the insulating space R1 in the above case.

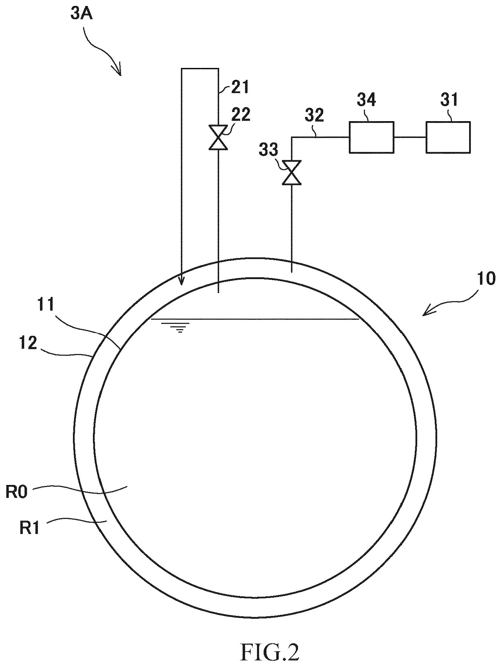

FIG. 2 is a schematic configuration diagram showing an entire configuration of the gas processing system 3A shown in FIG. 1. The gas processing system 3A includes the above-described multiple-shell tank 10. FIG. 2 shows a sectional view of the inner shell 11 and the outer shell 12. In FIG. 2, the tank cover 13 and the holding wall 14 are not shown. As shown in FIG. 2, the inner shell 11 separates the storage space R0 and the insulating space R1. The storage space R0 is located inside the inner shell 11 and stores the cryogenic liquid. The insulating space R1 is located outside the inner shell 11 and inside the outer shell 12.

A gas layer at an upper portion of the storage space R0 is filled with a boil off gas generated by vaporization of a cryogenic fluid in the storage space R0. The boil off gas in the storage space R0 is a combustible gas. Moreover, the insulating space R1 is filled with a combustible gas that is the same in type as the boil off gas in the inner shell 11. For example, the cryogenic liquid in the storage space R0 is liquefied hydrogen, and the gas in the insulating space R1 is a hydrogen gas.

The multiple-shell tank 10 includes an introducing passage 21 through which the boil off gas in the inner shell 11, i.e., the boil off gas in the storage space R0 is introduced into the insulating space R1. An introducing valve 22 is located at the introducing passage 21. For example, the introducing valve 22 is a valve that opens when the pressure in the insulating space R1 becomes lower than predetermined set lower limit pressure. In the present embodiment, the introducing valve 22 is a manual valve or remote control valve controlled by an operator.

Instead of or in addition to the introducing passage 21 and the introducing valve 22, the gas processing system 3A may include a gas supplier that introduces a combustible gas into the insulating space R1 from the outside of the multiple-shell tank 10.

The gas processing system 3A includes a combustor 31, a discharge passage 32, a discharge valve 33, and a filter 34. The combustor 31 is located outside the outer shell 12. One end portion of the discharge passage 32 is located in the insulating space R1, and the other end portion of the discharge passage 32 is connected to the combustor 31. The discharge passage 32 discharges the combustible gas from the insulating space R1 and guides the combustible gas to the combustor 31. The combustor 31 combusts the combustible gas which has been guided by the discharge passage 32.

The discharge valve 33 is located at the discharge passage 32. In the present embodiment, the discharge valve 33 is a valve that releases the pressure in the insulating space R1 when the pressure in the insulating space R1 becomes the set upper limit pressure or more. In the present embodiment, the discharge valve 33 is a manual valve or remote control valve controlled by an operator or a self-operated automatic valve (safety valve, for example) that automatically opens when the pressure in the insulating space R1 becomes the set upper limit pressure or more.

In the present embodiment, the pressure at the combustor 31 side in the discharge passage 32 is maintained lower than the pressure in the insulating space R1. Therefore, when the discharge valve 33 opens, the combustible gas is supplied from the insulating space R1 through the discharge passage 32 to the combustor 31 by the pressure of the gas in the insulating space R1. However, an exhauster may be located at the discharge passage 32, and the combustible gas may be forcibly supplied from the insulating space R1 to the combustor 31. Examples of the exhauster include a compressor and an exhaust pump. In this case, the pressure at the combustor 31 side in the discharge passage 32 does not have to be maintained lower than the pressure in the insulating space R1.

The filter 34 is located at a portion of the discharge passage 32 which is located between the discharge valve 33 and the combustor 31. The filter 34 removes foreign matters in the combustible gas which has been guided from the insulating space R1. The foreign matters in the gas are assumed to be, for example, chips of the thermal insulation located in the insulating space R1 or dust in the gas which has entered into the insulating space R1 during construction.

As described above, according to the gas processing system 3A of the present embodiment, the combustible gas discharged from the insulating space R1 located outside the inner shell 11 in the multiple-shell tank 10 can be safely processed by being combusted by the combustor 31.

Moreover, in the present embodiment, by opening the introducing valve 22, the boil off gas in the inner shell 11 can be introduced into the insulating space R1 through the introducing passage 21. Therefore, a device that introduces a gas to the insulating space R1 does not have to be additionally prepared outside the multiple-shell tank 10.

### Modified Example 1 of Embodiment 1

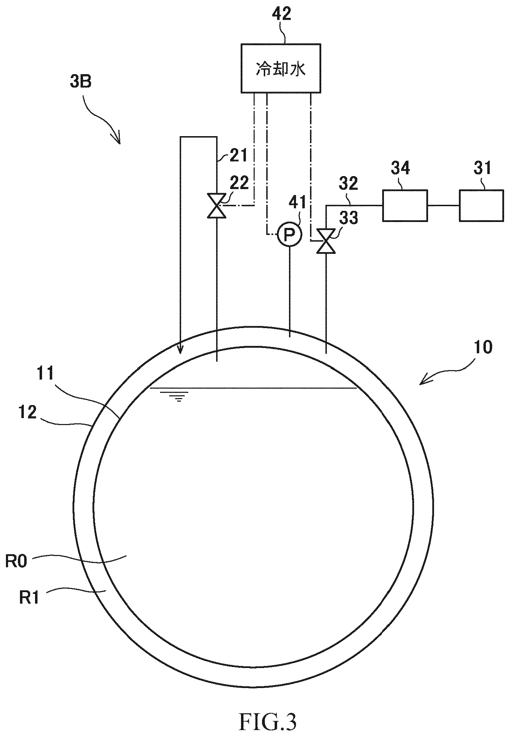

Each of the introducing valve 22 and the discharge valve 33 may be a power-operated automatic valve that is controlled electrically. FIG. 3 is a schematic configuration diagram showing an entire configuration of a gas processing system 3B according to Modified Example 1 of Embodiment 1.

In addition to the components of the gas processing system 3A, the gas processing system 3B includes a pressure gauge 41 and a controller 42. The pressure gauge 41 measures the pressure in the insulating space R1. The pressure gauge 41 is communicably connected to the controller 42. Information of the pressure measured by the pressure gauge 41 is sent to the controller 42.

In Modified Example 1, the introducing valve 22 and the discharge valve 33 are control valves controlled by the controller 42. The controller 42 is a so-called computer and includes: a calculation processor, such as a CPU; and a storage, such as a ROM and a RAM (not shown). The storage stores a program executed by the calculation processor, various fixed data, and the like. The calculation processor performs data transmission and reception with an external device. The controller 42 performs gas pressure adjustment processing of adjusting the pressure of the gas in the insulating space R1 in such a manner that the calculation processor reads and executes a predetermined gas pressure adjustment program stored in the storage. The controller 42 may include computers. In this case, the controller 42 may control the introducing valve 22 and the discharge valve 33 by distributed control performed by the cooperation of the computers or may individually control the introducing valve 22 and the discharge valve 33.

The storage of the controller 42 stores the predetermined set upper limit pressure and the set lower limit pressure lower than the set upper limit pressure. For example, the controller 42 may determine one or both of the set upper limit pressure and the set lower limit pressure in accordance with the pressure of the gas layer in the inner shell 11 and/or the temperature in the inner shell 11. The controller 42 controls the discharge valve 33 and the introducing valve 22 such that the pressure of the gas in the insulating space R1 is maintained within a range of not more than the set upper limit pressure and not less than the set lower limit pressure.

Specifically, the controller 42 controls the discharge valve 33 such that the discharge valve 33 opens when the pressure measured by the pressure gauge 41 exceeds the set upper limit pressure. Then, after the discharge valve 33 opens, for example, the controller 42 controls the discharge valve 33 such that the discharge valve 33 closes when the pressure measured by the pressure gauge 41 becomes lower than the set upper limit pressure or when the pressure measured by the pressure gauge 41 becomes lower than a predetermined first set value between the set upper limit pressure and the set lower limit pressure.

Moreover, the controller 42 controls the introducing valve 22 such that the introducing valve 22 opens when the pressure measured by the pressure gauge 41 falls below the set lower limit pressure. Then, after the introducing valve 22 opens, for example, the controller 42 controls the introducing valve 22 such that the introducing valve 22 closes when the pressure measured by the pressure gauge 41 becomes higher than the set lower limit pressure or when the pressure measured by the pressure gauge 41 becomes higher than a predetermined second set value between the set upper limit pressure and the set lower limit pressure.

According to the configuration of Modified Example 1, the pressure of the gas in the insulating space R1 is adjusted by the gas pressure adjustment program stored in the storage of the controller 42. Therefore, a range in which the pressure of the gas in the insulating space R1 is maintained is easily changed. In Modified Example 1, both of the introducing valve 22 and the discharge valve 33 do not have to be controlled by the controller 30, and only one of the introducing valve 22 and the discharge valve 33 may be controlled by the controller 30. To be specific, the controller 42 may control only one of the introducing valve 22 and the discharge valve 33.

### Modified Example 2 of Embodiment 1

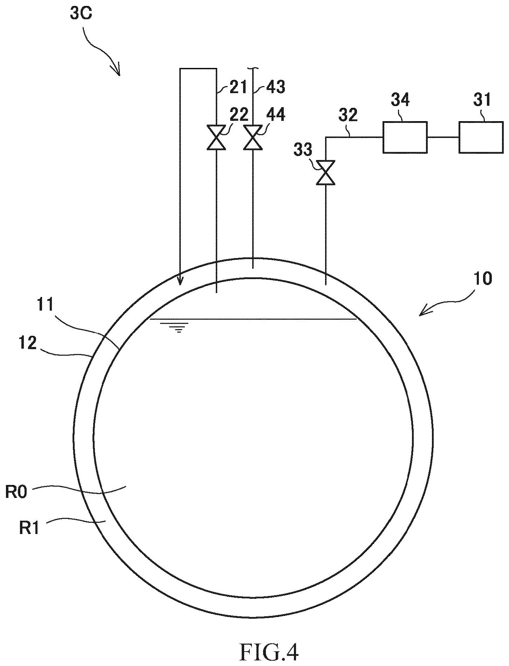

FIG. 4 is a schematic configuration diagram showing an entire configuration of a gas processing system 3C according to Modified Example 2 of Embodiment 1. In addition to the components of the gas processing system 3A, the gas processing system 3C further includes: an atmosphere open passage 43 through which the insulating space R1 is open to the atmosphere; and an atmosphere open valve 44 located at the atmosphere open passage 43. One end portion of the atmosphere open passage 43 is located in the insulating space R1, and the other end portion of the atmosphere open passage 43 is open to the atmosphere.

In Modified Example 2, the discharge valve 33 is a manual valve or remote control valve which is controlled by an operator to release the pressure in the insulating space R1.

Moreover, the atmosphere open valve 44 is an automatic valve that automatically releases the pressure in the insulating space R1 when the pressure in the insulating space R1 becomes the set upper limit pressure or more. Before the pressure in the insulating space R1 reaches the set upper limit pressure, the discharge valve 33 is controlled by an operator to open. Therefore, basically, the atmosphere open valve 44 does not open. However, there are cases, such as a case where the reduction in the pressure in the insulating space R1 is inadequate even though the combustible gas is being supplied from the insulating space R1 to the combustor 31 (for example, a case where the gas, the amount of which exceeds an allowable processing capacity, is supplied to the combustor 31) and a case where the combustor 31 is broken. In such emergency, the pressure in the insulating space R1 reaches the set upper limit pressure, and the atmosphere open valve 44 opens. Therefore, according to Modified Example 2, in an emergency in which the remaining combustible gas exists in the insulating space R1 although the combustible gas is being guided to the combustor 31, the remaining combustible gas can be discharged from the insulating space R1 through the atmosphere open passage 43 by opening the atmosphere open valve 44. Thus, the pressure of the gas in the insulating space R1 can be maintained within a pressure range that is allowable from the viewpoint of structural strengths of the inner shell 11 and the outer shell 12.

For example, the atmosphere open valve 44 may be a self-operated automatic valve (safety valve, for example). Or, for example, the atmosphere open valve 44 may be controlled by the controller 42 described in Modified Example 1.

Moreover, the atmosphere open passage 43 may extend so as to branch from a portion of the discharge passage 32. In this case, the gas processing system 3C may be able to select whether to supply the gas to the combustor 31 through the discharge passage 32 or to release the gas to the atmosphere through the atmosphere open passage 43.

### Modified Example 3 of Embodiment 1

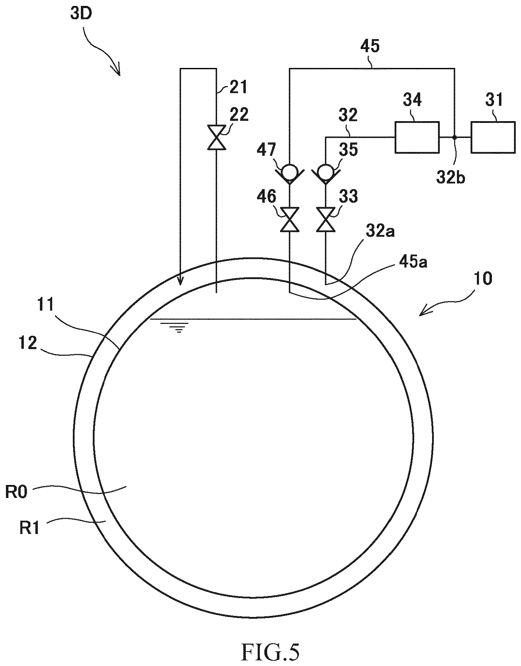

FIG. 5 is a schematic configuration diagram showing an entire configuration of a gas processing system 3D according to Modified Example 3 of Embodiment 1. In Modified Example 3, the gas processing system 3D guides the combustible gas discharged from the insulating space R1 and the boil off gas of the gas layer in the storage space R0 to the same combustor 31.

The gas processing system 3D includes the above-described multiple-shell tank 10, the introducing passage 21, the introducing valve 22, the combustor 31, the discharge passage 32, the discharge valve 33, and the filter 34. Moreover, the gas processing system 3D includes a BOG discharge passage 45 and a BOG discharge valve 46.

One end portion 45a of the BOG discharge passage 45 is located at the gas layer in the storage space R0, and the other end portion of the BOG discharge passage 45 is connected to a portion of the discharge passage 32 which is located between the filter 34 and the combustor 31. The BOG discharge passage 45 discharges the boil off gas from the inside of the inner shell 11 and guides the boil off gas to the portion of the discharge passage 32 which is located between the filter 34 and the combustor 31. The other end portion of the BOG discharge passage 45 may be connected to the portion of the discharge passage 32 which is located between the discharge valve 33 and the filter 34. Hereinafter, a portion of the discharge passage 32 to which the BOG discharge passage 45 is connected is referred to as a joining portion 32b.

The BOG discharge valve 46 is located at the BOG discharge passage 45. For example, the BOG discharge valve 46 is a valve that releases the pressure of the gas layer in the storage space R0 when the pressure of the gas layer in the storage space R0 becomes the set upper limit pressure or more. For example, the BOG discharge valve 46 is a manual valve or remote control valve controlled by an operator or a self-operated automatic valve (safety valve, for example) that automatically opens when the pressure of the gas layer in the storage space R0 becomes the set upper limit pressure or more.

A check valve 35 is located at a portion of the discharge passage 32 which is located between the discharge valve 33 and the joining portion 32b. The check valve 35 prevents the gas from flowing backward to the insulating space R1. Moreover, a check valve 47 is located at a portion of the BOG discharge passage 45 which is located between the other end portion (i.e., the joining portion 32b) of the BOG discharge passage 45 and the BOG discharge valve 46. The check valve 47 prevents the gas from flowing backward to the gas layer in the storage space R0.

In Modified Example 3, the pressure at the combustor 31 side in the discharge passage 32 is maintained lower than each of the pressure in the insulating space R1 and the pressure of the gas layer in the storage space R0. Therefore, when the discharge valve 33 opens, the combustible gas is supplied from the insulating space R1 through the discharge passage 32 to the combustor 31 by the pressure of the gas in the insulating space R1. Moreover, when the BOG discharge valve 46 opens, the combustible gas is supplied from the gas layer in the storage space R0 through the BOG discharge passage 45 to the combustor 31 by the pressure of the gas in the gas layer in the storage space R0.

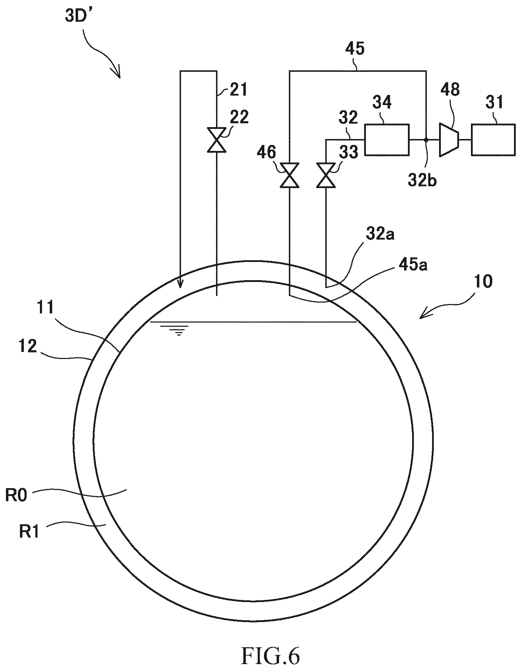

However, as shown in FIG. 6, an exhauster 48 may be located at a portion of the discharge passage 32 which is located between the joining portion 32b and the combustor 31, and the gas may be forcibly supplied from the insulating space R1 and the gas layer in the storage space R0 to the combustor 31. Or, the exhausters 48 may be located at the BOG discharge passage 45 and a portion of the discharge passage 32 which is located between the joining portion 32b and the filter 34. In this case, the pressure at the combustor 31 side in the discharge passage 32 does not have to be maintained lower than each of the pressure in the insulating space R1 and the pressure of the gas layer in the storage space R0. Examples of the exhauster 48 include a compressor and an exhaust pump.

Both the filter 34 and the exhauster 48 may be located at the portion of the discharge passage 32 which is located between the joining portion 32b and the combustor 31. In this case, the filter 34 is located at a portion of the discharge passage 32 which is located between the joining portion 32b and the exhauster 48. This is to prevent foreign matters in the combustible gas guided from the insulating space R1 from entering into the exhauster 48.

As described above, according to the configuration of Modified Example 3, the combustible gas discharged from the insulating space R1 located outside the inner shell 11 in the multiple-shell tank 10 and the boil off gas generated in the inner shell 11 can be safely processed by being combusted by the single combustor 31.

Moreover, the check valve 35 and the check valve 47 are respectively located at the discharge passage 32 and the BOG discharge passage 45. Therefore, when both the discharge valve 33 and the BOG discharge valve 46 open, the combustible gas can be prevented from flowing from one of the insulating space R1 and the gas layer in the storage space R0 to the other.

In Modified Example 3, the check valve 35 and the check valve 47 do not necessarily have to be respectively located at the discharge passage 32 and the BOG discharge passage 45. For example, only one of the discharge valve 33 and the BOG discharge valve 46 may be operated or controlled so as to open. Or, as shown in FIG. 6, the exhauster 48 may be located at the portion of the discharge passage 32 which is located between the joining portion 32b and the combustor 31, and the gas may be forcibly supplied to the combustor 31.

Modified Examples 1 and 2 of Embodiment 1 are applicable to Embodiment 2 described below and its modified examples.

### Embodiment 2

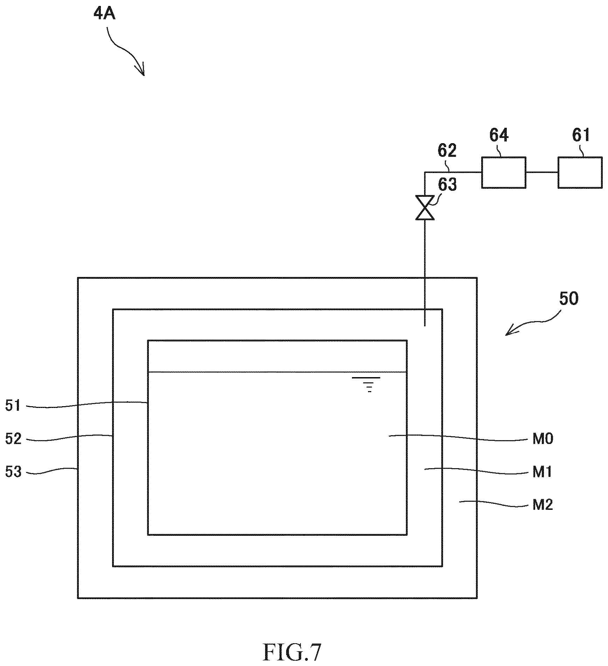

FIG. 7 is a schematic configuration diagram showing an entire configuration of a gas processing system 4A according to Embodiment 2 of the present disclosure. FIG. 7 includes a sectional view of a multiple-shell tank 50 included in the gas processing system 4A. In the present embodiment, the multiple-shell tank 50 is a membrane tank mounted on a ship.

The multiple-shell tank 50 includes: a primary membrane 51 storing a cryogenic liquid; a secondary membrane 52 covering the primary membrane 51; and a hull inner shell 53 further covering the secondary membrane 52. The hull inner shell 53 is part of the hull.

The cryogenic liquid is stored in a storage space M0 in the primary membrane 51. A sealed first insulating space M1 (so-called inter barrier space (IBS)) is located between the primary membrane 51 and the secondary membrane 52. Thermal insulation is located in the first insulating space M1. Moreover, a sealed second insulating space M2 is located between the secondary membrane 52 and the hull inner shell 53. Thermal insulation is located in the second insulating space M2 (so-called insulation space (IS)).

Each of the primary membrane 51 and the secondary membrane 52 does not have such strength as to support the pressure and weight of the cryogenic liquid in the primary membrane 51. The pressure and weight of the cryogenic liquid in the primary membrane 51 are supported by the hull through the thermal insulation in the first insulating space M1 and the thermal insulation in the second insulating space M2. The primary membrane 51 has a sealing function that separates the storage space M0 and the first insulating space M1, and the secondary membrane 52 has a sealing function that separates the first insulating space M1 and the second insulating space M2.

In the present embodiment, the primary membrane 51 serves as an inner shell storing the cryogenic liquid therein, and the secondary membrane 52 serves as an outer shell accommodating the primary membrane 51 serving as the inner shell. Moreover, the hull inner shell 53 serves as an outer shell further covering the secondary membrane 52 serving as the outer shell. Hereinafter, for convenience of explanation, the primary membrane 51, the secondary membrane 52, and the hull inner shell 53 are respectively referred to as an inner shell 51, a first outer shell 52, and a second outer shell 53.

A gas layer located at an upper portion in the storage space M0 is filled with a boil off gas generated by evaporation of the cryogenic fluid in the storage space M0. The boil off gas in the storage space M0 is a combustible gas, and the first insulating space M1 and the second insulating space are also filled with a combustible gas. In the present embodiment, for example, the storage space M0 stores liquefied hydrogen, and the first insulating space M1 is filled with a hydrogen gas. Moreover, the second insulating space M2 is filled with a nitrogen gas or a hydrogen gas.

In the present embodiment, the gas processing system 4A processes the combustible gas discharged from the first insulating space M1. The gas processing system 4A includes a combustor 61, a discharge passage 62, a discharge valve 63, and a filter 64. The combustor 61 is located outside the first outer shell 52 and the second outer shell 53. One end portion of the discharge passage 62 is located in the first insulating space M1, and the other end portion of the discharge passage 62 is connected to the combustor 61. The discharge passage 62 discharges the combustible gas from the first insulating space M1 and guides the combustible gas to the combustor 61.

The discharge valve 63 is located at the discharge passage 62. For example, the discharge valve 63 is a valve that releases the pressure in the first insulating space M1 when the pressure in the first insulating space M1 becomes the set upper limit pressure or more. In the present embodiment, the discharge valve 33 is a manual valve or remote control valve controlled by an operator or a self-operated automatic valve (safety valve, for example) that automatically opens when the pressure in the first insulating space M1 becomes the set upper limit pressure or more.

In the present embodiment, the pressure at the combustor 61 side in the discharge passage 62 is maintained lower than the pressure in the first insulating space M1. Therefore, when the discharge valve 63 opens, the combustible gas is supplied from the first insulating space M1 through the discharge passage 62 to the combustor 61 by the pressure of the gas in the first insulating space M1. However, an exhauster may be located at the discharge passage 62, and the combustible gas may be forcibly supplied from the first insulating space M1 to the combustor 61. Examples of the exhauster include a compressor and an exhaust pump.

The filter 64 is located at a portion of the discharge passage 62 which is located between the discharge valve 63 and the combustor 61. The filter 64 removes foreign matters in the combustible gas guided from the first insulating space M1. The foreign matters in the gas are assumed to be, for example, chips of the thermal insulation located in the first insulating space M1.

As described above, according to the gas processing system 4A of the present embodiment, the combustible gas discharged from the first insulating space M1 located outside the inner shell 51 in the multiple-shell tank 50 can be safely processed by being combusted by the combustor 61.

### Modified Example 1 of Embodiment 2

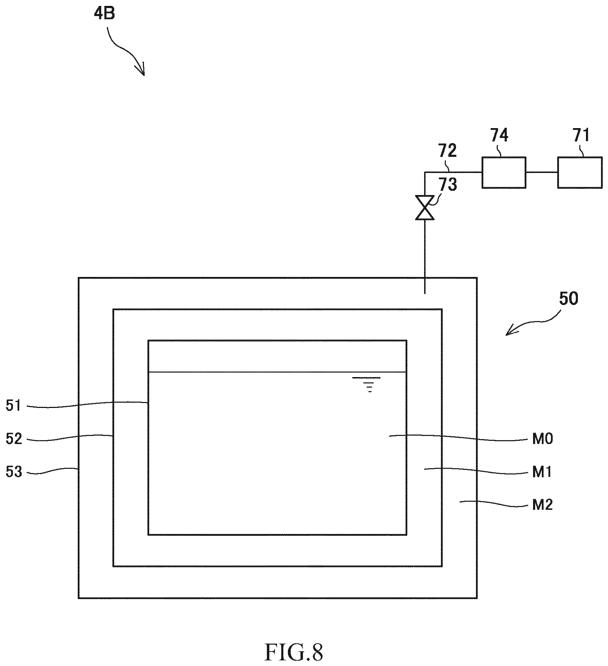

FIG. 8 is a schematic configuration diagram showing an entire configuration of a gas processing system 4B according to Modified Example 1 of Embodiment 2. In Modified Example 1, the gas processing system 4B processes the combustible gas discharged from the second insulating space M2. In Modified Example 1, the second insulating space M2 is filled with a hydrogen gas.

Instead of the combustor 61, the discharge passage 62, the discharge valve 63, and the filter 64, the gas processing system 4B includes a combustor 71, a discharge passage 72, a discharge valve 73, and a filter 74. In Modified Example 1, unlike the discharge passage 62, an end portion of the discharge passage 72 is located in the second insulating space M2, not in the first insulating space M1. Other than this, the combustor 71, the discharge passage 72, the discharge valve 73, and the filter 74 are respectively the same in configuration as the combustor 61, the discharge passage 62, the discharge valve 63, and the filter 64 in the gas processing system 4A, and therefore, explanations thereof are omitted.

In Modified Example 1, the combustible gas discharged from the second insulating space M2 located outside the inner shell 51 in the multiple-shell tank 50 can be safely processed by being combusted by the combustor 71.

### Modified Example 2 of Embodiment 2

FIG. 9 is a schematic configuration diagram showing an entire configuration of a gas processing system 4C according to Modified Example 2 of Embodiment 2. In Modified Example 2, the gas processing system 4C processes not only the combustible gas discharged from the first insulating space M1 but also the combustible gas discharged from the second insulating space M2. In Modified Example 2, the second insulating space M2 is filled with a hydrogen gas.

The gas processing system 4C includes the multiple-shell tank 50, a combustor 81, a first discharge passage 82, a second discharge passage 83, a first discharge valve 84, a first check valve 85, a second discharge valve 86, a second check valve 87, and a filter 88.

The combustor 81 is located outside the first outer shell 52 and the second outer shell 53. One end portion 82a of the first discharge passage 82 is located in the first insulating space M1, and the other end portion of the first discharge passage 82 is connected to the combustor 81. The first discharge passage 82 discharges the combustible gas from the first insulating space M1 and guides the combustible gas to the combustor 81.

One end portion 83a of the second discharge passage 83 is located in the second insulating space M2, and the other end portion of the second discharge passage 83 is connected to a portion of the first discharge passage 82. The second discharge passage 83 discharges the combustible gas from the second insulating space M2 and guides the combustible gas to the first discharge passage 82. Hereinafter, a portion of the first discharge passage 82 to which the second discharge passage 83 is connected is referred to as a joining portion 82b.

The first discharge valve 84 is located at a portion of the first discharge passage 82 which is located between the end portion 82a of the first discharge passage 82 and the joining portion 82b. For example, the first discharge valve 84 is a valve that releases the pressure in the first insulating space M1 when the pressure in the first insulating space M1 becomes the set upper limit pressure or more. For example, the first discharge valve 84 is a manual valve or remote control valve controlled by an operator or a self-operated automatic valve (safety valve, for example) that automatically opens when the pressure in the first insulating space M1 becomes the set upper limit pressure or more. Moreover, the first check valve 85 is located at a portion of the first discharge passage 82 which is located between the first discharge valve 84 and the joining portion 82b. The first check valve 85 prevents the gas from flowing backward to the first insulating space M1.

The second discharge valve 86 is located at the second discharge passage 83. For example, the second discharge valve 86 is a valve that releases the pressure in the second insulating space M2 when the pressure in the second insulating space M2 becomes the set upper limit pressure or more. For example, the second discharge valve 86 is a manual valve or remote control valve controlled by an operator or a self-operated automatic valve (safety valve, for example) that automatically opens when the pressure in the second insulating space M2 becomes the set upper limit pressure or more. Moreover, the second check valve 87 is located at a portion of the second discharge passage 83 which is located between the other end portion (i.e., the joining portion 82b) of the second discharge passage 83 and the second discharge valve 86. The second check valve 87 prevents the gas from flowing backward to the second insulating space M2.

In Modified Example 2, the pressure at the combustor 81 side in the first discharge passage 82 is maintained lower than each of the pressure in the first insulating space M1 and the pressure in the second insulating space M2. Therefore, when the first discharge valve 84 opens, the combustible gas is supplied from the first insulating space M1 through the first discharge passage 82 to the combustor 81 by the pressure of the gas in the first insulating space M1. Moreover, when the second discharge valve 86 opens, the combustible gas is supplied from the second insulating space M2 through the second discharge passage 83 to the combustor 81 by the pressure of the gas in the second insulating space M2.

However, an exhauster may be located at a portion of the first discharge passage 82 which is located between the joining portion 82b and the combustor 81, and the combustible gas may be forcibly supplied from the first insulating space M1 and the second insulating space M2 to the combustor 81. Two exhausters may be located at the second discharge passage 83 and a portion of the first discharge passage 82 which is located between the end portion 82a and the joining portion 82b.

The filter 88 is located at a portion of the first discharge passage 82 which is located between the joining portion 82b and the combustor 81. The filter 88 removes foreign matters in the combustible gas guided from the first insulating space M1 and the second insulating space M2. The foreign matters in the gas are assumed to be, for example, chips of the thermal insulation located in each of the first insulating space M1 and the second insulating space M2.

As described above, according to the configuration of Modified Example 2, the combustible gas discharged from the first insulating space M1 and the second insulating space M2 which are located outside the inner shell 51 in the multiple-shell tank 50 can be safely processed by being combusted by the combustor 81.

Moreover, both the combustible gas in the first insulating space M1 and the combustible gas in the second insulating space M2 can be safely processed by being combusted by the single combustor 81.

Moreover, the first check valve 85 and the second check valve 87 are respectively located at the first discharge passage 82 and the second discharge passage 83. Therefore, when both the first discharge valve 84 and the second discharge valve 86 open, the combustible gas can be prevented from flowing from one of the first insulating space M1 and the second insulating space M2 to the other.

In Modified Example 2, the first check valve 85 and the second check valve 87 do not necessarily have to be respectively located at the first discharge passage 82 and the second discharge passage 83. For example, only one of the first discharge valve 84 and the second discharge valve 86 may be operated or controlled so as to open. Or, for example, an exhauster may be located at a portion of the first discharge passage 82 which is located between the joining portion 82b and the combustor 81, and the gas may be forcibly supplied to the combustor 31.

### Other Embodiments

The present disclosure is not limited to the above-described embodiments, and various modifications may be made within the scope of the present disclosure.

For example, the components in Embodiment 1, Modified Examples 1, 2, 3 of Embodiment 1, Embodiment 2, and Modified Examples 1 and 2 of Embodiment 2 can be suitably combined with each other.

For example, the combustible gas that is a target to be guided to the combustor is not limited to the hydrogen gas. For example, the combustible gas may be a natural gas or the like. The boil off gas in the inner shell and the gas between the inner shell and the adjacent outer shell may be different in type from each other. Moreover, the gas between the inner shell and the adjacent outer shell and the gas between two adjacent outer shells may be the same in type as each other or may be different in type from each other.

The combustor may be a gas combustion unit (GCU) as described in Modified Example 3 of Embodiment 1 or may be a propulsion engine, a power generation engine, a boiler, a fuel cell, or the like. Moreover, a gas that is a mixture of a combustible gas and an inert gas may be guided to the combustor.

Moreover, in Embodiment 1 and Modified Examples 1, 2, and 3 of Embodiment 1, the insulating space R1 is filled with the combustible gas that is the same in type as the boil off gas in the inner shell 11. However, the insulating space R1 may be filled with a gas that is different in type from the boil off gas in the inner shell 11. In this case, instead of the introducing passage 21 and the introducing valve 22, the multiple-shell tank 10 may include a gas supplier that introduces the combustible gas into the insulating space R1 from the outside of the multiple-shell tank 10.

Moreover, in Embodiment 2 and Modified Examples 1 and 2 of Embodiment 2, for example, each of the discharge valves 63, 73, 84, and 86 may be a control valve controlled by a controller as in Modified Example 1 of Embodiment 1. Each of the gas processing systems according to Embodiment 2 and Modified Examples 1 and 2 of Embodiment 2 may include an introducing passage and an introducing valve, may include, for example, an atmosphere open passage as in Modified Example 2 of Embodiment 1, or may include a BOG discharge passage as in Modified Example 3 of Embodiment 1. Moreover, each of the multiple-shell tanks 10 according to Embodiment 1 and Modified Examples 1, 2, and 3 of Embodiment 1 may include outer shells as in Embodiment 2. In this case, in each of the gas processing systems according to Embodiment 1 and Modified Examples 1, 2, and 3 of Embodiment 1, the gas may be guided to the combustor from the second insulating space between the first outer shell and the second outer shell instead of the first insulating space between the inner shell and the first outer shell as in Modified Example 1 of Embodiment 2, or the gas may be guided to the combustor from both of the first insulating space between the inner shell and the first outer shell and the second insulating space between the first outer shell and the second outer shell as in Modified Example 2 of Embodiment 2.

The number of outer shells included in the multiple-shell tank is not limited to the values described in the above embodiments. For example, in a multiple-shell tank including three or more outer shells, the gas guided to the combustor through the discharge passage may be the combustible gas in a space between two adjacent outer shells among the outer shells. To be specific, the combustible gas in a space between the outer shell closest to the inner shell and the adjacent outer shell located outside it may be guided to the combustor, or the combustible gas in a space between the outer shell that is a second one from the inside or its subsequent one and the adjacent outer shell located outside it may be guided to the combustor.

In the above embodiment, the multiple-shell tank is included in the ship. However, the multiple-shell tank may be placed on land.

The functionality of the elements disclosed herein may be implemented using circuitry or processing circuitry which includes general purpose processors, special purpose processors, integrated circuits, ASICs ("Application Specific Integrated Circuits"), conventional circuitry and/or combinations thereof which are configured or programmed to perform the disclosed functionality. Processors are considered processing circuitry or circuitry as they include transistors and other circuitry therein. The processor may be a programmed processor which executes a program stored in a memory. In the disclosure, the circuitry, units, or means are hardware that carry out or are programmed to perform the recited functionality. The hardware may be any hardware disclosed herein or otherwise known which is programmed or configured to carry out the recited functionality. When the hardware is a processor which may be considered a type of circuitry, the circuitry, means, or units are a combination of hardware and software, the software being used to configure the hardware and/or processor.

## Claims

1. A gas processing system (4C) comprising:
a multiple-shell tank (50) including
an inner shell (51) storing a cryogenic liquid therein,
outer shells (52, 53) accommodating the inner shell,
a combustible gas being filled in an insulating space (M1) between the inner shell (51) and the outer shells (52) or an insulating space (M2) between two adjacent outer shells (52, 53) among the outer shells;
a combustor (81) located outside the outer shells (52, 53);
discharge passages (82, 83) that discharge the combustible gas from the insulating space (M1, M2) and guide the combustible gas to the combustor (81); and
discharge valves (84, 86) located at the discharge passage (82, 83),
wherein:
the outer shells (52, 53) include a first outer shell (52) and a second outer shell (53) accommodating the first outer shell (52);
the insulating spaces (M1, M2) include a first insulating space (M1) between the inner shell (51) and the first outer shell (52) and a second insulating space (M2) between the first outer shell (52) and the second outer shell (53);
the discharge passages (82, 83) include a first discharge passage (82) that discharges the combustible gas from the first insulating space (M1) and guides the combustible gas to the combustor (81) and a second discharge passage (83);
the discharge valves (84, 86) include a first discharge valve (84) located at the first discharge passage (82) and a second discharge valve (86) located at the second discharge passage (83),
**characterized in that** the second insulating space (M2) is filled with the combustible gas that is the same in type as or different in type from the combustible gas filled in the first insulating space (M1), wherein the second discharge passage (83) discharges the combustible gas from the second insulating space (M2) and guides the combustible gas to the combustor (81) or a portion of the first discharge passage (82) which is located between the first discharge valve (84) and the combustor (81).

2. The gas processing system according to claim 1, wherein at least one of the discharge valves is an automatic valve that automatically opens when pressure in the insulating space becomes set upper limit pressure or more.

3. The gas processing system (4C) according to claim 1, further comprising:
an atmosphere open passage (43) through which the insulating space is open to an atmosphere; and
an atmosphere open valve (44) located at the atmosphere open passage (43), wherein
the atmosphere open valve (44) is an automatic valve that opens when pressure in the insulating space becomes set upper limit pressure or more.

4. The gas processing system (4C) according to any one of claims 1 to 3, further comprising a filter (88) that is located at a portion of the first discharge passage (82) which is located between the first discharge valve (84) and the combustor (81), and removes foreign matters in the combustible gas.

5. The gas processing system (4C) according to any one of claims 1 to 4, wherein:
the first insulating space (M1) is filled with a combustible gas that is the same in type as a boil off gas in the inner shell (51); and
the multiple-shell tank (10) further includes
an introducing passage (21) through which the boil off gas in the inner shell (51)is introduced into the first insulating space (M1) and
an introducing valve (22) located at the introducing passage (21).

6. The gas processing system (4C) according to any one of claims 1 to 5, wherein:
the boil off gas in the inner shell (51) is combustible; and
the gas processing system includes
a BOG discharge passage (45) that discharges the boil off gas from an inside of the inner shell (51) and guides the boil off gas to the combustor (81) or a portion of the first discharge passage (82) which is located between the first discharge valve (84) and the combustor (81) and
a BOG discharge valve (46) located at the BOG discharge passage (45).

7. A ship (1) comprising the gas processing system (4C) according to any one of claims 1 to 6.

8. The ship according to claim 7, wherein:
the multiple-shell tank (10) is a membrane tank;
the inner shell (51) is a primary membrane; and
the outer shells (52, 53) include
a secondary membrane as a first outer shell (52) and
a hull inner shell of the ship as a second outer shell (53) accommodating the first outer shell (52).

## Patentansprüche

1. Gasverarbeitungssystem (4C), umfassend:
einen mehrmanteligen Tank (50), einschließlich
eines inneren Mantels (51), in dem eine kryogene Flüssigkeit gelagert ist,
äußeren Mänteln (52, 53), die den inneren Mantel aufnehmen,
eines brennbaren Gases, das in einen Isolierraum (M1) zwischen dem inneren Mantel (51) und den äußeren Mänteln (52) oder einen Isolierraum (M2) zwischen zwei benachbarten äußeren Mänteln (52, 53) von den äußeren Mänteln eingefüllt ist;
eine Brennkammer (81), die außerhalb der äußeren Mäntel (52, 53) angeordnet ist;
Abführkanäle (82, 83), die das brennbare Gas aus dem Isolierraum (M1, M2) abführen und das brennbare Gas zu der Brennkammer (81) leiten; und
Abführventile (84, 86), die an dem Abführkanal (82, 83) angeordnet sind, wobei:
die äußeren Mäntel (52, 53) einen ersten äußeren Mantel (52) und einen zweiten äußeren Mantel (53) einschließen, der den ersten äußeren Mantel (52) aufnimmt;
die Isolierräume (M1, M2) einen ersten Isolierraum (M1) zwischen dem inneren Mantel (51) und dem ersten äußeren Mantel (52) und einen zweiten Isolierraum (M2) zwischen dem ersten äußeren Mantel (52) und der zweiten äußeren Mantel (53) einschließen;
die Abführkanäle (82, 83) einen ersten Abführkanal (82), der das brennbare Gas aus dem ersten Isolierraum (M1) abführt und das brennbare Gas zu der Brennkammer (81) leitet, und einen zweiten Abführkanal (83) einschließen;
die Abführventile (84, 86) ein an dem ersten Abführkanal (82) angeordnetes erstes Abführventil (84) und ein an dem zweiten Abführkanal (83) angeordnetes zweites Abführventil (86) einschließen,
**dadurch gekennzeichnet, dass** der zweite Isolierraum (M2) mit dem brennbaren Gas gefüllt ist, das von der gleichen Art wie oder von einer anderen Art als das in den ersten Isolierraum (M1) gefüllte brennbare Gas ist, wobei der zweite Abführkanal (83) das brennbare Gas aus dem zweiten Isolierraum (M2) abführt und das brennbare Gas zu der Brennkammer (81) oder einem Abschnitt des ersten Abführkanals (82) leitet, der zwischen dem ersten Abführventil (84) und der Brennkammer (81) angeordnet ist.

2. Gasverarbeitungssystem nach Anspruch 1, wobei mindestens eines der Abführventile ein automatisches Ventil ist, das sich automatisch öffnet, wenn ein Druck in dem Isolierraum einen eingestellten oberen Grenzdruck oder mehr erreicht.

3. Gasverarbeitungssystem (4C) nach Anspruch 1, ferner umfassend:
einen zu einer Atmosphäre offenen Kanal (43), durch den der Isolierraum zu einer Atmosphäre hin offen ist; und
ein Atmosphärenöffnungsventil (44), das an dem Atmosphärenöffnungskanal (43) angeordnet ist, wobei
das Atmosphärenöffnungsventil (44) ein automatisches Ventil ist, das sich öffnet, wenn der Druck in dem Isolierraum einen eingestellten oberen Grenzdruck oder mehr erreicht.

4. Gasverarbeitungssystem (4C) nach einem der Ansprüche 1 bis 3, ferner umfassend einen Filter (88), der an einem Abschnitt des ersten Abführkanals (82) angeordnet ist, der zwischen dem ersten Abführventil (84) und der Brennkammer (81) angeordnet ist, und Fremdstoffe in dem brennbaren Gas entfernt.

5. Gasverarbeitungssystem (4C) nach einem der Ansprüche 1 bis 4, wobei:
der erste Isolierraum (M1) mit einem brennbaren Gas gefüllt ist, das von der gleichen Art wie ein Boil-off-Gas in dem inneren Mantel (51) ist; und
der mehrmantelige Tank (10) ferner einschließt
einen Einleitkanal (21), durch den das Boil-off-Gas in dem inneren Mantel (51) in den ersten Isolierraum (M1) eingeleitet wird, und
ein Einleitventil (22), das an dem Einleitkanal (21) angeordnet ist.

6. Gasverarbeitungssystem (4C) nach einem der Ansprüche 1 bis 5, wobei:
das Boil-off-Gas in dem inneren Mantel (51) brennbar ist; und
das Gasverarbeitungssystem einschließt
einen BOG-Abführkanal (45), der das Boil-off-Gas aus einem Inneren des inneren Mantels (51) abführt und das Boil-off-Gas zu der Brennkammer (81) oder einem Abschnitt des ersten Abführkanals (82) leitet, der zwischen dem ersten Abführventil (84) und der Brennkammer (81) angeordnet ist, und
ein BOG-Abführventil (46), das an dem BOG-Abführkanal (45) angeordnet ist.

7. Schiff (1), umfassend das Gasverarbeitungssystem (4C) nach einem der Ansprüche 1 bis 6.

8. Schiff nach Anspruch 7, wobei:
der mehrmantelige Tank (10) ein Membrantank ist;
der innere Mantel (51) eine Primärmembran ist; und
die äußeren Mäntel (52, 53) einschließen
eine Sekundärmembran als einen ersten äußeren Mantel (52) und
eine Rumpfinnenschale des Schiffes als einen zweiten äußeren Mantel (53), der den ersten äußeren Mantel (52) aufnimmt.

## Revendications

1. Système de traitement de gaz (4C) comprenant :
un réservoir à enveloppes multiples (50) comportant
une enveloppe interne (51) stockant un liquide cryogénique à l'intérieur de celle-ci,
des enveloppes externes (52, 53) recevant l'enveloppe interne,
un gaz combustible étant rempli dans un espace isolant (M1) entre l'enveloppe interne (51) et les enveloppes externes (52) ou un espace isolant (M2) entre deux enveloppes externes (52, 53) adjacentes parmi les enveloppes externes ;
une chambre de combustion (81) située à l'extérieur des enveloppes externes (52, 53) ;
des passages d'évacuation (82, 83) qui évacuent le gaz combustible de l'espace isolant (M1, M2) et guident le gaz combustible vers la chambre de combustion (81) ; et
des soupapes d'évacuation (84, 86) situées au niveau du passage d'évacuation (82, 83), dans lequel :
les enveloppes externes (52, 53) comportent une première enveloppe externe (52) et une seconde enveloppe externe (53) recevant la première enveloppe externe (52) ;
les espaces isolants (M1, M2) comportent un premier espace isolant (M1) entre l'enveloppe interne (51) et la première enveloppe externe (52) et un second espace isolant (M2) entre la première enveloppe externe (52) et la seconde enveloppe externe (53) ;
les passages d'évacuation (82, 83) comportent un premier passage d'évacuation (82) qui évacue le gaz combustible du premier espace isolant (M1) et guide le gaz combustible vers la chambre de combustion (81) et un second passage d'évacuation (83) ;
les soupapes d'évacuation (84, 86) comportent une première soupape d'évacuation (84) située au niveau du premier passage d'évacuation (82) et une seconde soupape d'évacuation (86) située au niveau du second passage d'évacuation (83),
**caractérisé en ce que** le second espace isolant (M2) est rempli du gaz combustible qui est de même type ou de type différent du gaz combustible rempli dans le premier espace isolant (M1), dans lequel le second passage d'évacuation (83) évacue le gaz combustible du second espace isolant (M2) et guide le gaz combustible vers la chambre de combustion (81) ou une partie du premier passage d'évacuation (82) qui est située entre la première soupape d'évacuation (84) et la chambre de combustion (81).

2. Système de traitement de gaz selon la revendication 1, dans lequel au moins l'une des soupapes d'évacuation est une soupape automatique qui s'ouvre automatiquement lorsque la pression dans l'espace isolant devient égale ou supérieure à la pression limite définie.

3. Système de traitement de gaz (4C) selon la revendication 1, comprenant en outre :
un passage d'ouverture d'atmosphère (43) à travers lequel l'espace isolant est ouvert à une atmosphère ; et
une soupape d'ouverture d'atmosphère (44) située au niveau du passage d'ouverture d'atmosphère (43), dans lequel
la soupape d'ouverture d'atmosphère (44) est une soupape automatique qui s'ouvre lorsque la pression dans l'espace isolant devient égale ou supérieure à la pression limite supérieure définie.

4. Système de traitement de gaz (4C) selon l'une quelconque des revendications 1 à 3, comprenant en outre un filtre (88) qui est situé au niveau d'une partie du premier passage d'évacuation (82) qui est située entre la première soupape d'évacuation (84) et la chambre de combustion (81), et qui élimine des corps étrangers dans le gaz combustible.

5. Système de traitement de gaz (4C) selon l'une quelconque des revendications 1 à 4, dans lequel :
le premier espace isolant (M1) est rempli d'un gaz combustible qui est du même type qu'un gaz d'évaporation dans l'enveloppe interne (51) ; et
le réservoir à enveloppe multiples (10) comporte en outre
un passage d'introduction (21) par lequel le gaz d'évaporation dans l'enveloppe interne (51) est introduit dans le premier espace isolant (M1) et
une soupape d'introduction (22) située au niveau du passage d'introduction (21).

6. Système de traitement de gaz (4C) selon l'une quelconque des revendications 1 à 5, dans lequel :
le gaz d'évaporation dans l'enveloppe interne (51) est combustible ; et
le système de traitement de gaz comporte
un passage d'évacuation BOG (45) qui évacue le gaz d'évaporation depuis un intérieur de l'enveloppe interne (51) et guide le gaz d'évaporation vers la chambre de combustion (81) ou une partie du premier passage d'évacuation (82) qui est située entre la première soupape d'évacuation (84) et la chambre de combustion (81) et
une soupape d'évacuation BOG (46) située au niveau du passage d'évacuation BOG (45).

7. Navire (1) comprenant le système de traitement de gaz (4C) selon l'une quelconque des revendications 1 à 6.

8. Navire selon la revendication 7, dans lequel :
le réservoir à enveloppe multiples (10) est un réservoir à membrane ;
l'enveloppe interne (51) est une membrane primaire ; et
les enveloppes externes (52, 53) comportent
une membrane secondaire en guise de première enveloppe externe (52) et
une enveloppe interne de coque du navire en guise de seconde enveloppe externe (53) recevant la première enveloppe externe (52).
